# EUROPÄISCHE PATENTANMELDUNG

(11) **EP 0 760 422 A1**
(43) Veröffentlichungstag der Anmeldung: **05.03.1997**
(21) Anmeldenummer: 96113344.4
(22) Anmeldetag: 20.08.1996
(51) Int. Cl.: F02B 77/13, F16F 7/10

(54) **Vorrichtung und Verfahren zur Verringerung der von einer Verbrennungskraftmaschine hervorgerufenen Geräuschbelastung**

(30) Priorität: 25.08.1995 DE 19531280
(71) Anmelder: WOCO Franz-Josef Wolf & Co., D-63628 Bad Soden-Salmünster (DE)
(72) Erfinder: Wolf, Franz Josef, 63628 Bad Soden-Salmünster (DE); Denker, Dietrich, Dr., 70599 Stuttgart (DE)
(74) Vertreter: Mattusch, Gundula

(57) **Zusammenfassung**

Es ist eine Vorrichtung und ein Verfahren zur Verringerung der von einer Verbrennungskraftmaschine hervorgerufenen Geräuschbelastung vorgeschlagen mit wenigstens einem zur Verbrennungskraftmaschine benachbart angeordneten Schwingungskörper, der zu Schwingungen anregbar ist, die im wesentlichen gegenphasig zu den von der Verbrennungskraftmaschine verursachten Schwingungen verlaufen.

## Beschreibung

Die vorliegende Erfindung betrifft eine Vorrichtung zur Verringerung der von einer Verbrennungskraftmaschine hervorgerufenen Geräuschbelastung gemäß dem Oberbegriff des Anspruchs 1. Sie betrifft außerdem ein Verfahren zur Verringerung der von einer Verbrennungskraftmaschine hervorgerufenen Geräuschbelastung gemaß dem Oberbegriff des Anspruchs 11.

Es ist eine an die Automobilindustrie seit langem gerichtete Anforderung, den Fahrkomfort zu steigern. Gleichzeitig wird aufgrund der nicht unendlichen Verfügbarkeit der für die Verbrennung in Verbrennungskraftmotoren zur Verfügung stehenden Kraftstoffe versucht, den Flottenverbrauch insgesamt zu senken.

Aufgrund seines im Vergleich zum Benzinmotor höheren Wirkungsgrad werden auch seit langem im Personenkraftwagenbereich Dieselmotoren eingesetzt, die neben der Aufladung heutzutage mit Mehrventiltechnik arbeiten und mit hohen Einspritzdrücken von bis zu 2000 bar. Es werden in der Zwischenzeit auch im Personenkraftwagenbereich direkt einspritzende Dieselmotoren eingesetzt, die einen im Vergleich zu Vorkammermotoren oft rauheren Motorlauf mit sich bringen, welcher dem Erfordernis nach Komfort und damit auch akustischem Komfort zuwiderläuft.

Zur Erhöhung des akustischen Komforts ist es bereits bekannt, den Dieselmotor zur Absenkung der von ihm verursachten Geräuschbelastung zu kapseln. Hierbei wird der Motor im Motorraum vollständig von einem schalldämmenden Gehäuse umgeben oder auch nur teilweise eingekapselt, so daß diejenigen Bereiche des Motors mit einer Kapselung umgeben sind, welche maßgeblich zur Geräuschbelastung in Form von Luftschall beitragen.

So ist bereits aus der DE 40 09 688 A1 ein Abschlußteil oder Abschirmteil für Motorgehäuse von Brennkraftmaschinen bekannt, mit dem akustisch besonders störend in Erscheinung tretende Motorbereiche abgedeckt werden können, ohne daß der bei einer vollständigen Kapselung oft negativ beeinflußte Wärmehaushalt des Verbrennungsmotors nachteilig beeinflußt wird.

Die Funktion aller bislang bekannten Vorrichtungen zur Verringerung der Geräuschbelastung einer Brennkraftmaschine beruht dabei darauf, entweder die vom Motor stammende Schallenergie in Wärme umzuwandeln oder aber, beispielsweise bei der bereits angesprochenen Kapselung des Motors, die Ausbreitung des Luftschalls zu behindern.

Die bekannten Vorrichtungen zur teilweisen oder vollständigen Kapselung des Motors weisen dabei den Nachteil auf, daß sie den Wärmehaushalt des Motors negativ beeinflussen und auch aufgrund der im Motorraum herrschenden Temperaturen aus wärmebeständigen, oft zweischichtig ausgeführten Werkstoffen bestehen und daher aufwendig und damit teuer in der Herstellung sind.

Wenn mit den bekannten Vorrichtungen die vom Motor ausgehende Schallenergie in Wärme umgesetzt werden soll, sind aufgrund der auch auftretenden tiefen Frequenzen große wirksame dissipative Flächen erforderlich und sie können auch aufgrund ihrer oftmals nur engbandigen Wirkung nur bestimmte als Störung empfundene Frequenzen bekämpfen.

Der vorliegenden Erfindung liegt daher zur Beseitigung der geschilderten Nachteile die Aufgabe zugrunde, eine Vorrichtung zur Verringerung der von einer Verbrennungskraftmaschine hervorgerufenen Geräuschbelastung zu schaffen, die an die als bei verschiedenen Verbrennungskraftmaschinen unterschiedlich störend empfundenen Frequenzen einfach angepaßt werden kann, einen günstigen Aufbau besitzt und den Wärmehaushalt des Motors nicht negativ beeinflußt. Gleichzeitig soll ein Verfahren zur Verringerung der von der Verbrennungskraftmaschine verursachten Geräuschbelastung geschaffen werden, welches gestattet, die verschiedenen vom Motor induzierten und als störend empfundenen Frequenzen auch selektiv zu bekämpfen.

Die Erfindung weist zur Lösung dieser Aufgabe hinsichtlich der Vorrichtung die im Anspruch 1 angegebenen Merkmale auf. Vorteilhafte Vorrichtungsausgestaltungen sind in weiteren Ansprüchen beschrieben.

Gleichzeitig weist die Erfindung zur Lösung dieser Aufgabe hinsichtlich des Verfahrens die im Anspruch 11 angegebenen Merkmale auf.

Die vorliegende Erfindung geht von der Erkenntnis aus, daß beim Betrieb einer Verbrennungskraftmaschine, insbesondere beim sehr häufig anzutreffenden Vierzylinderreihenmotor Luftschall aufgrund von starken Schwingungen des gesamten Aggregates auftreten, welche von freien Massenkräften zweiter Ordnung und freien Massenmomenten induziert werden und sich dabei überwiegend in beiden Richtungen der Hochachse des Motors erstrecken. Die freien Massenkräfte und Massenmomente erzeugen dabei ein jeweils oberhalb und unterhalb der Verbrennungskraftmaschine hin- und herpumpendes Schallfeld zweiter Ordnung, herrührend von den im Betrieb der Verbrennungskraftmaschine auftretenden Körperschallschwingungen.

Gleichzeitig treten aufgrund hoher Einspritzdrücke und kurzer zur Verbrennung zur Verfügung stehenden Zeiten rauhe Motor-Körperschallschwingungen auf, die an der Peripherie der Verbrennungskraftmaschine ebenfalls als Luftschall nach außen abgestrahlt werden, wobei in beiden Fällen der Motor als Dipolstrahler wirkt.

Die zuletzt genannten als rauh empfundenen Luftschallkomponenten werden dabei durch Schwebungen verursacht, also Schwingungen mit periodisch anschwellender und abklingender Amplitude, die als besonderes störend empfunden werden, wobei es sich hierbei gezeigt hat, daß diese Schwebungsvorgänge besonders bei Grund- oder Stützfrequenzen von etwa 300 Hz, 500 Hz, 800 Hz sowie 1200 Hz und 1400 Hz auftreten, überlagert von Modulationen von 30 und 60 Hz.

Es bedeutet dies mit anderen Worten, daß als störend empfundene Frequenzen nicht in einem isolierten Frequenzbereich und damit also möglicherweise mit einem Impedanzschalldämpfer bedämpfbar auftreten, sondern über breite Frequenzbereiche.

Die Erfindung schlägt daher eine Vorrichtung zur Verringerung der von einer Verbrennungskraftmaschine hervorgerufenen Geräuschbelastung vor, welche wenigstens einen benachbart zur Verbrennungskraftmaschine angeordneten Schwingungskörper besitzt, der zu den von der Verbrennungskraftmaschine verursachten bzw. ausgeführten Schwingungen im wesentlichen gegenphasigen Schwingungen anregbar ist.

Es bedeutet dies mit anderen Worten, daß in der Nähe der Verbrennungskraftmaschine und beabstandet zu dieser mindestens ein Schwingungskörper vorgesehen ist, der zu Schwingungen angeregt werden kann, welche gegenphasig zu den von der Verbrennungskraftmaschine verursachten Schwingungen ausgebildet sind und somit die vom Motor induzierten störenden Luftschallschwingungen auslöschen oder im wesentlichen auslöschen, so daß ein deutlich verringertes Geräuschniveau der laufenden Verbrennungskraftmaschine erzielt wird.

Hierbei ist gemäß der Erfindung vorgesehen, daß der wenigstens eine Schwingungskörper in Richtung der Zylinderhochachse der Verbrennungskraftmaschine benachbart zu dieser vorgesehen ist. Es heißt dies mit anderen Worten, daß ein schwingungsfähiger Körper entweder oberhalb oder unterhalb oder sowohl oberhalb als auch unterhalb des Motors angeordnet ist, so daß die in Richtung der Motorhaube abgestrahlten Schallwellen bedämpft werden können, genauso wie die in Richtung der Fahrbahnoberfläche verlaufenden Schallwellen, die nach der Reflektion an der Fahrbahnoberfläche als störend nach außen in die Umgebung tretend empfunden werden würden.

Hierzu ist gemäß der Erfindung vorgesehen, daß der Schwingungskörper eine im wesentlichen haubenförmige Ausbildung besitzt derart, daß er sich über weitgehend die gesamte Länge und Breite der Oberseite und/oder Unterseite der Verbrennungskraftmaschine beabstandet zu dieser erstreckt. Hierdurch wird erreicht, daß sich der haubenförmige Schwingungskörper im wesentlichen über den gesamten Bereich der Schallabstrahlung des als Dipohlstrahler wirkenden Motors erstreckt, so daß die dann von dem haubenförmigen Schwingungskörper nach seiner Anregung emittierten Schallwellen die vom Motor induzierten Schallwellen im wesentlichen oder vollständig auslöschen.

Hierbei kann der Schwingungskörper, also beispielsweise der haubenförmig ausgebildete Schwingunskörper mittels wenigstens einer schwingungsübertragenden Einrichtung an der Verbrennungskraftmaschine abgestützt sein.

Hierdurch wird der Schallabstrahlung entgegengewirkt, welche durch die freien Massenkräfte zweiter Ordnung und die Massenmomente, die zu Starrkörperschwingung des Motors führen, entgegengewirkt.

Es heißt dies, daß die Verbrennungskraftmaschine oberhalb ihrer Stuckereigenresonanz von etwa 7 Hz mit konstanter Amplitude schwingt, welche je nach der Verbrennungskraftmaschine von etwa 0,1 mm bis etwa 0,5 mm reicht, so daß der über eine schwingungsübertragende Einrichtung an der Verbrennungskraftmaschine abgestützte haubenförmige Schwingungskörper seinerseits zu Schwingungen angeregt wird. Mittels der schwingungsübertragenden Einrichtung kann die Abstimmung dabei derart erfolgen, daß der haubenförmige Schwingungskörper, welcher in Form einer Nahfeldschale oder ganz allgemein als schalenförmiger Körper ausgebildet sein kann, gegenphasig zur Schwingungsbewegung der Verbrennungskraftmaschine schwingt, so daß die von der Verbrennungskraftmaschine emittierten Schallwellen ausgelöscht werden.

In Fortführung der Erfindung können dabei als schwingungsübertragende Einrichtungen Federelemente, insbesondere weiche Federelemente eingesetzt werden, welche die weitgehend in Zylinderhochachsrichtung ausgeführte Schwingungsbewegung der Verbrennungskraftmaschine derart auf den haubenförmigen Schwingungskörper, also beispielsweise die Nahfeldschale übertragen, daß der Schwingungskörper gegenphasig zur Verbrennungskraftmaschine schwingt.

Mittels der weichen Federelemente wird eine Abkopplung des Schwingungskörpers erzielt, so daß eine Eigenresonanz von etwa 20 Hz auftritt und der oder die Schwingungskörper bzw. der oder die Schalen oberhalb dieser Eigenresonanz gegenphasig zur Verbrennungskraftmaschine schwingen und die von der Verbrennungskraftmaschine ausgehenden Schallwellen durch die von dem Schwingungskörper ausgehenden Schallwellen ausgelöscht werden.

Zusätzlich zu den angesprochenen weichen Federelementen können gemäß der Erfindung Tilgerelemente eingesetzt werden, mittels deren eine zusätzliche Abkopplungswirkung erzielt wird. Mit diesen Tilgern ist eine gezielte Beeinflussung des Schwingungsverhaltens des Schwingungskörpers möglich derart, daß beim Durchfahren des Eigenresonanzbereichs der Nahfeldschale bzw. der Nahfeldschalen als Schwingungskörper nicht nur die Schwingungsausschläge verringert werden, sondern dem Schwingungskörper auch eine gegenüber der Schwingung der Verbrennungskraftmaschine gegenphasige Schwingung aufgezwungen werden kann, damit eine gezielte Auslöschung der als störend empfundenen Schallwellen erreichbar ist.

Durch eine Abstimmung der weichen Federelemente, beispielsweise in Form von Elastomerfederelementen und die Auslegung der Tilgerelemente lassen sich die bei unterschiedlichen Verbrennungskraftmaschinen auftretenden unterschiedlichen als störend empfundenen Schallwellen gezielt teilweise oder vollständig auslöschen.

In Fortführung der Erfindung ist es dabei vorgesehen, den Schwingungskörper mittels wenigstens eines an ihm angebrachten fremderregbaren Aktuators in Schwingungen zu versetzen, welche gegenphasig zu den von der Verbrennungskraftmaschine ausgeführten Schwingungen verlaufen. Hierdurch ist es möglich, die in vertikaler, also in Zylinderhochachsrichtung verlaufende Schwingungsbewegung, bzw. die sich aus dieser Bewegung ergebende Geräuschbelastung über den gesamten Drehzahlbereich der Verbrennungskraftmaschine zu verringern, da die Schwingungsbewegung der Verbrennungskraftmaschine in vertikaler Richtung über den gesamten Drehzahlbereich weitgehend konstant bleibt, so daß mittels einer Fremderregung des Aktuators der Schwingungskörper in gegenphasige Schwingungen versetzt werden kann, um die vom Motor ausgehenden Schallwellen durch Energieaufzehr zu eliminieren. Der bzw. die fremderregbaren Aktuatoren können dabei durch eine Steuereinheit gespeist werden.

Weiterhin ist es gemäß der Erfindung vorgesehen, daß der Schwingungskörper Teilbereiche mit sich von anderen Teilbereichen unterschiedlich steuerbaren Schwingungsverhalten besitzt derart, daß über die Flächenerstreckung des Schwingungskörpers örtlich unterschiedliche Teilschwingungsverhalten einstellbar sind.

Es bedeutet dies mit anderen Worten, daß an dem beispielsweise in Form einer Nahfeldschale ausgebildeten Schwingungskörper Teilflächen vorgesehen sind, welche eine Elastizität aufweisen, die sich von der Elastizität anderer Teilbereiche der Nahfeldschale unterscheidet, so daß die Teilbereiche unterschiedlicher Elastizität beispielsweise mittels einer gezielten Fremderregung durch Aktuatoren gezielt in Schwingungen versetzt werden können, so daß die über unterschiedliche Frequenzbereiche auftretenden rauhen Klangkomponenten des Motors durch die gezielte Erzeugung von örtlichem Gegenschall zum Abbau der Rauhigkeitskomponenten im Luftschallfeld erregbar sind.

In Weiterbildung ist es gemäß der Erfindung dabei vorgesehen, die Teilbereiche unterschiedlicher Elastizität mittels Membrankörpern auszubilden, an denen zur Beeinflussung des Eigenresonanzverhaltes der Membrankörper Schwingungstilger angeordnet werden können, so daß oberhalb der sich dann einstellenden Tilgerresonanz an den Membrankörpern gegenphasige Ausschläge erzwungen werden können, welche Schallfelder erzeugen, die den vom Motor abgestrahlten Schallfeldern entgegenwirken, so daß bei sich über verschiedene Frequenzen erstreckende rauhe Motorklangkomponenten eine gezielte Auslöschung dieser als störend empfundenen rauhen Klangkomponenten erzielbar ist und zwar über die an der beispielsweise haubenförmig ausgebildeten Nahfeldschale entsprechend verteilt angeordneten unterschiedlichen Membrankörper.

Hierbei ist es auch möglich, als Membrankörper aus der Lautsprechertechnik stammende Kunststoffmembranen einzusetzen, welche mittels örtlicher Aktuatoren in Form von elektromagnetisch betriebener Spulen gezielt in gegenphasige Schwingungen versetzt werden.

Nach dem erfindungsgemäßen Verfahren ist es vorgesehen, zur Verringerung der von einer Verbrennungskraftmaschine hervorgerufenen Geräuschbelastung wenigstens einen benachbart zur Verbrennungskraftmaschine angeordneten Schwingungskörper einzusetzen, der zur Erzeugung von Luftschallschwingungen derart angeregt wird, daß die von der Verbrennungskraftmaschine induzierten Luftschallschwingungen weitgehend ausgelöscht werden.

Die Erfindung wird im folgenden anhand der Zeichnung näher erläutert. Diese zeigen jeweils schematisch in
- Fig. 1: die als Dipolstrahler wirkende Verbrennungskraftmaschine;
- Fig. 2: den am Motor angeordneten und vom Motor selbst erregten Schwingungskörper;
- Fig. 3: den am Motor angeordneten und mittels Aktuatoren fremderregten Schwingungskörper und
- Fig. 4: den am Motor angeordneten und mit Teilbereichen unterschiedlicher Elastizität ausgebildeten Schwingungskörper.

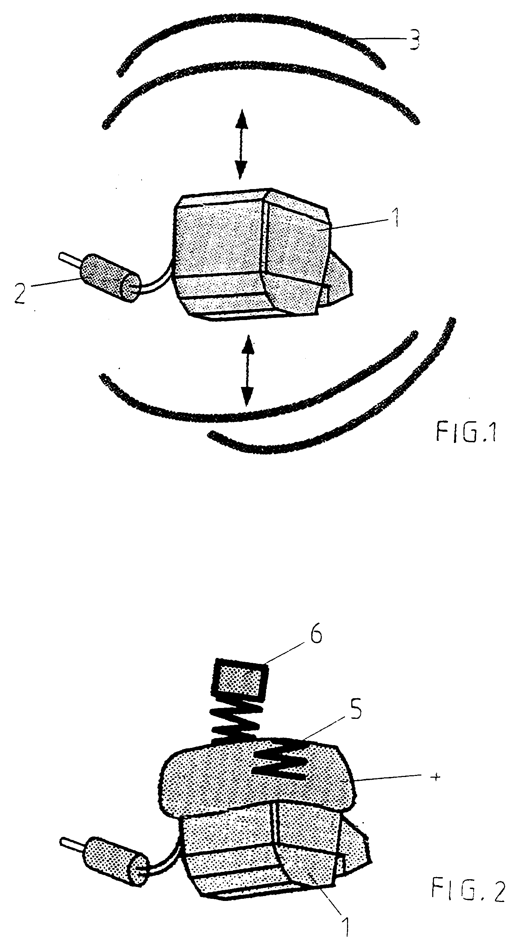

Fig. 1 der Zeichnung zeigt in schematischer Weise eine Verbrennungskraftmaschine 1 mit einer daran angeordneten Abgasleitung 2. Fig. 1 der Zeichnung dient dabei der Darstellung der primär in Zylinderhochachsrichtung verlaufenden Schwingungsbewegung der Verbrennungskraftmaschine 1 während des Betriebs.

Die Verbrennungskraftmaschine 1 - ein Vier-Zylinder-Reihenmotor - vollführt dabei aufgrund der freien Massenkräfte zweiter Ordnung und der im Betrieb ebenfalls auftretenden freien Massenmomente eine oszillierende Schwingungsbewegung überwiegend in Zylinderhochachsrichtung, die dazu führt, daß die Verbrennungskraftmaschine 1 als Dipolstrahler wirkt und ein hin- und herpumpendes Schallfeld zweiter Ordnung oberhalb und unterhalb der Verbrennungskraftmaschine 1 induziert wird. Dieses Schallfeld ist dabei stilisiert als 3 dargestellt.

Neben diesen starken Schwingungen der Verbrennungskraftmaschine 1 treten beim Lauf des Motors aufgrund von Schwingungsüberlagerungen Schwebungsvorgänge auf, welche primär bei Grund- bzw. Stützfrequenzen von 300 Hz, 500 Hz, 800 Hz und 1200 sowie 1400 Hz auftreten und von Modulationen um 30 sowie 60 Hz bei geraden Motorordnungen überlagert werden.

Fig. 2 der Zeichnung zeigt in ebenfalls schematischer Weise die Verbrennungskraftmaschine 1 mit einem an der Oberseite angeordneten Schwingungskörper 4, welcher sich als haubenförmig ausgebildete Nahfeldschale weitgehend über die gesamte Längs- und Quererstreckung der Verbrennungskraftmaschine 1 erstreckt und dabei über weiche Federelelemente, vorzugsweise Elastomerfederelemente, an der Verbrennungskraftmaschine 1 abgestützt ist.

Die weichen schwingungsübertragenden und entkoppelnden Elastomerfederelemente sind in der dargestellten schematischen Ansicht als Federeinrichtung 5 angedeutet.

Neben dieser Federeinrichtung 5 ist in Fig. 2 der Zeichnung in ebenfalls schematischer und stilisierter Ansicht eine Tilgereinrichtung 6 vorgesehen, welche dazu dient, das Schwingungsverhalten der Nahfeldschale 4 zu beeinflussen, so daß beim Durchfahren des Resonanzbereiches der Nahfeldschale 4 keine großen Schwingungsamplituden auftreten und weiterhin dafür sorgt, daß die Nahfeldschale 4 gegenphasig zur Verbrennungskraftmaschine 1 schwingt.

Hierdurch wird in vorteilhafter Weise erreicht, daß die von der Verbrennungskraftmaschine 1 induzierten störenden Schallwellen durch von der Nahfeldschale 4 induzierte gegenphasige Schallwellen eleminiert werden.

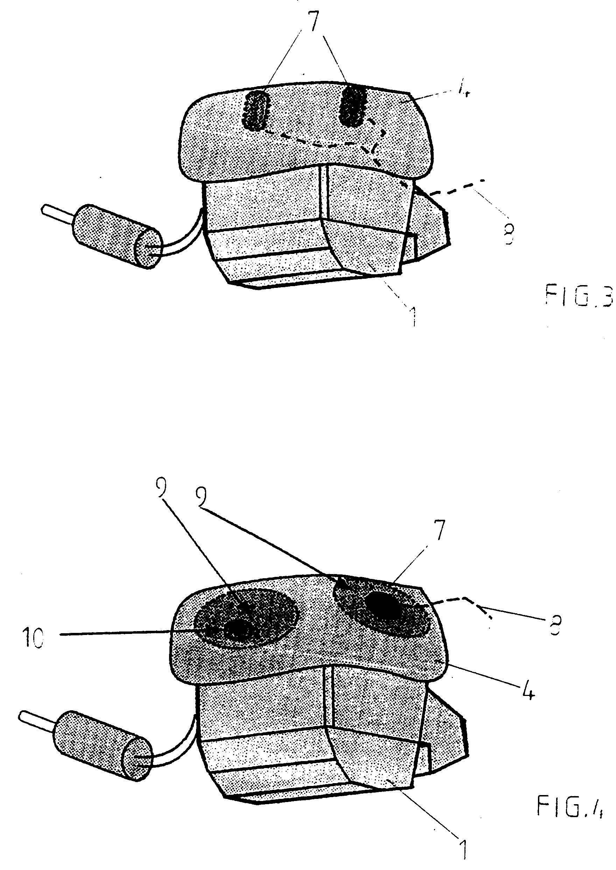

Fig. 3 der Zeichnung zeigt in schematischer und stilisierter Ansicht die an der Verbrennungskraftmaschine 1 angeordnete Nahfeldschale 4, wobei in dieser Ausführungsform die Nahfeldschale 4 mit fremdbetätigbaren Aktuatoren bzw. Aktoren 7 versehen ist.

Die fremderregbaren Aktoren 7 sind dabei über eine stilisiert dargestellte Steuerleitung 8 mit einer nicht dargestellten Steuereinrichtung versehen, welche die Aktoren 7 fremderregt.

Es bedeutet dies mit anderen Worten, daß die Aktoren 7 dafür sorgen, die Nahfeldschale 4 in Schwingungen zu versetzen, welche gegenphasig zu den von der Verbrennungskraftmaschine 1 ausgeführten Schwingungen verlaufen, so daß sich die von der Nahfeldschale 4 und der Verbrennungskraftmaschine 1 ausgehenden Schallwellen gegenseitig auslöschen.

Schließlich ist in Fig. 4 der Zeichnung eine weitere Ausführungsform der an der Verbrennungskraftmaschine 1 angeordneten Nahfeldschale 4 dargestellt, wobei in dieser Ausführungsform die Nahfeldschale 4 Teilbereiche 9 von einer Elastizität aufweisen, die sich von der Elastizität der die Teilbereiche 9 umgebenden Teilbereiche der Nahfeldschale 4 unterscheidet.

Mittels dieser, in der dargestellten Ausführungsform durch Membranen gebildeten Teilbereiche ist es möglich, das Schwingungsverhalten der Nahfeldschale 4 gezielt abzustimmen derart, daß einzelne, als besonders störend empfundene, von der Verbrennungskraftmaschine 1 induzierten Schallwellen ausgelöscht werden können.

Es ist dabei möglich, die Membran 9 mit einer Tilgereinrichtung 10 zu versehen, mittels der das Schwingungsverhalten der Membran 9 gezielt beeinflußbar ist.

Gleichzeitig ist es möglich, an der Membran 9 - wie dies Fig. 4 in der rechten Darstellungshälfte der Nahfeldschale 4 zeigt - mit einem über eine Versorgungsleitung 8 angesteuerten Aktuator 7 gezielt zu Körperschwingungen anzuregen, welche an der Übergangsstelle der Membran 9 zur Umgebungsluft Luftschallschwingungen induzieren, die den von der Verbrennungskraftmaschine 1 induzierten Luftschallschwingungen gegenphasig begegnen und diese in abgestimmter Weise auslöschen.

Hinsichtlich vorstehender, im einzelnen nicht näher erläuterten Merkmale der Erfindung wird im übrigen ausdrücklich auf die Ansprüche und die Zeichnung verwiesen.

## Patentansprüche

1. Vorrichtung zur Verringerung der von einer Verbrennungskraftmaschine hervorgerufenen Geräuschbelastung
**gekennzeichnet** durch
wenigstens einen benachbart zur Verbrennungskraftmaschine (1) angeordneten Schwingungskörper (4), der zu den von der Verbrennungskraftmaschine (1) ausgeführten Schwingungen im wesentlichen gegenphasigen Schwingungen anregbar ist.

2. Vorrichtung nach Anspruch 1,
dadurch **gekennzeichnet**,
daß der Schwingungskörper (4) in Richtung der Zylinderhochachse der Verbrennungskraftmaschine (1) benachbart zur Verbrennungskraftmaschine (1) angeordnet ist.

3. Vorrichtung nach Anspruch 1 oder 2,
dadurch **gekennzeichnet**,
daß der Schwingungskörper (4) eine haubenförmige Ausbildung besitzt derart, daß er sich über weitgehend die gesamte Länge und Breite der Oberseite und/oder Unterseite der Verbrennungskraftmaschine (1) beabstandet zu dieser erstreckt.

4. Vorrichtung nach einem der Ansprüche 1 bis 3,
dadurch **gekennzeichnet**,
daß der Schwingungskörper (4) mittels wenigstens einer schwingungsübertragenden Einrichtung (5) an der Verbrennungskraftmaschine (1) abgestützt ist.

5. Vorrichtung nach einem der Ansprüche 1 bis 4,
dadurch **gekennzeichnet**,
daß die schwingungsübertragende Einrichtung Federelemente (5) sind, mittels der die weitgehend in Zylinderhochachsrichtung ausgeführte Schwingungsbewegung der Verbrennungskraftmaschine (1) derart auf den Schwingungskörper übertragen wird, daß der Schwingungskörper (4) gegenphasig zur Verbrennungskraftmaschine (1) schwingt.

6. Vorrichtung nach einem der Ansprüche 1 bis 5,
dadurch **gekennzeichnet**,
daß an dem Schwingungskörper (4) eine dessen Schwingungsverhalten beeinflussende Tilgereinrichtung (6) vorgesehen ist.

7. Vorrichtung nach einem der Ansprüche 1 bis 6,
dadurch **gekennzeichnet**,
daß am Schwingungskörper (4) wenigstens ein fremderregbarer Aktuator (7) angeordnet ist, welcher den Schwingungskörper (4) in Schwingungen versetzt.

8. Vorrichtung nach einem der Ansprüche 1 bis 7,
dadurch **gekennzeichnet**,
daß der Schwingungskörper (4) Teilbereiche (9) mit sich von anderen Teilbereichen unterschiedlich steuerbaren Schwingungsverhalten besitzt derart, daß über die Flächenerstreckung des Schwingungskörpers (4) örtlich unterschiedliche Teilschwingungsverhalten einstellbar sind.

9. Vorrichtung nach einem der Ansprüche 1 bis 8,
dadurch **gekennzeichnet**,
daß der Schwingungskörper (4) als haubenförmige Nahfeldschale (4) ausgebildet ist derart, daß sie sich weitgehend über die gesamten Längs- und Quererstreckung der Verbrennungskraftmaschine (1) erstreckt.

10. Vorrichtung nach Anspruch 9,
dadurch **gekennzeichnet**,
daß die Nahfeldschale (4) an Teilbereichen ihrer Flächenerstreckung Membrankörper (7) besitzt, die zu Schwingungen anregbar sind, welche zu den Schwingungen der Verbrennungskraftmaschine (1) gegenphasig verlaufen.

11. Verfahren zur Verringerung der von einer Verbrennungskraftmaschine (1) hervorgerufenen Geräuschbelastung,
**gekennzeichnet** durch
wenigstens einen benachbart zur Verbrennungskraftmaschine (1) angeordneten Schwingungskörper (4), der zur Erzeugung von Luftschallschwingungen derart angeregt wird, daß die von der Verbrennungskraftmaschine (1) induzierten Luftschallschwingungen weitgehend ausgelöscht werden.
